Europäisches Patentamt

European Patent Office

Office européen des brevets

(19)

(11) Veröffentlichungsnummer: **0 343 519**

**A2**

(12)

## EUROPÄISCHE PATENTANMELDUNG

(21) Anmeldenummer: 89108981.5

(22) Anmeldetag: 18.05.89

(51) Int. Cl.4: **G01N 27/74**

(30) Priorität: 27.05.88 DE 8806967 U

(43) Veröffentlichungstag der Anmeldung:
29.11.89 Patentblatt 89/48

(84) Benannte Vertragsstaaten:
DE FR GB

(71) Anmelder: Siemens Aktiengesellschaft
Wittelsbacherplatz 2
D-8000 München 2(DE)

(72) Erfinder: Eckhard, Aidam
Ulmenstrasse 7
D-6729 Jockgrim(DE)
Erfinder: Marcaux, Günter
Bleichstrasse 30
D-6707 Schifferstadt(DE)

(54) **Messgerät zur Bestimmung der Suszeptibilitätsdifferenz zweier Gase.**

(57) Meßgerät zur Bestimmung der Suszeptibilitätsdifferenz zweier Gase mit einer flachen, gasdurch-strömten Meßkammer (1) rechteckigen Querschnitts, die sich teilweise im Magnetfeld (3) zwischen zwei Polschuhen (6) eines wechselstrom- oder impulsge-speisten Magnetkreises (4) befindet, wobei die Stirn-flächen (5) der Polschuhe (6) die Außenflächen der Meßkammerwände nicht berühren. Der Abstand (a) beträgt zwischen 0,05 und 0,2 mm. Dadurch wird die Meßkammer (1) vom Magnetkreis (4) mechanisch entkoppelt. Die Übertragung von akustischen Schwingungen auf den Gasstrom in der Meßkammer (1) wird vermindert.

Die Erfindung wird angewendet bei Sauerstoff-meßgeräten.

EP 0 343 519 A2

## Meßgerät zur Bestimmung der Suszeptibilitätsdifferenz zweier Gase

Die Erfindung bezieht sich auf ein Meßgerät zur Bestimmung der Suszeptibilitätsdifferenz zweier Gase, insbesondere zur Messung des Sauerstoffanteils in einem Meßgas, mit einer gasdurchströmten Meßkammer rechteckigen Querschnitts, die sich teilweise in einem senkrecht zur Strömungsrichtung verlaufenden Magnetfeld zwischen zwei Polschuhen eines wechselstrom- oder impulsgespeisten Magnetkreises befindet.

Erfindungsgemäß berühren die Stirnflächen der Polschuhe die Außenflächen der Meßkammerwände nicht. Damit werden Störeinflüsse verursacht durch die Übertragung akustischer Schwingungen und der Verlustwärme des Magnetkreises auf den in der Meßkammer fließenden Gasstrom vermindert.

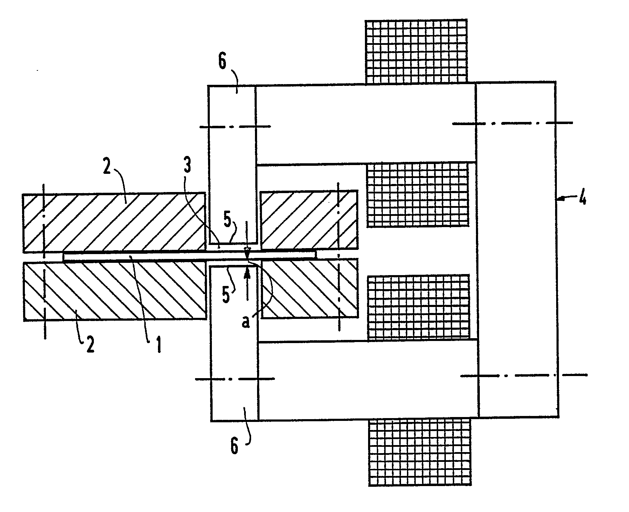

In der Figur ist ein Ausführungsbeispiel schematisch dargestellt und im folgenden beschrieben.

Der Querschnitt zeigt eine flache Meßkammer 1 rechteckigen Querschnitts, die zwischen zwei ein Gehäuse bildenden Schalenteilen 2 gehalten wird. Die Meßkammer 1 befindet sich teilweise im Luftspalt 3 eines wechselstrom- oder impulsgespeisten Magnetkreises 4, wobei die Stirnflächen 5 der Polschuhe 6 die Außenfläche der Wandungen der Meßkammer 1 nicht berühren. Der Abstand a zwischen. Stirnfläche 5 und Meßkammerwand beträgt mindestens 0,05 mm und höchstens 0,2 mm.

## Ansprüche

1. Meßgerät zur Bestimmung der Suszeptibilitätsdifferenz zweier Gase, mit einer gasdurchströmten Meßkammer rechteckigen Querschnitts, die sich teilweise im Magnetfeld zwischen zwei Polschuhen eines wechselstrom- oder impulsgespeisten Magnetkreises befindet, **dadurch gekennzeichnet,** daß die Stirnflächen (5) der Polschuhe (6) die Außenflächen der Meßkammerwände nicht berühren.

2. Meßgerät nach Anspruch 1, **dadurch gekennzeichnet,** daß der Abstand (a) zwischen Außenfläche der Meßkammer (1) und der Stirnfläche (5) des Polschuhs (6) mindestens 0,05 und höchstens 0,2 mm beträgt.

P 4426